# EUROPÄISCHE PATENTANMELDUNG

(11) **EP 4 714 623 A2**
(43) Veröffentlichungstag der Anmeldung: **25.03.2026**
(21) Anmeldenummer: 26157692.0
(22) Anmeldetag: 16.02.2017
(51) Int. Cl.: B27N 3/24

(54) **VORRICHTUNG UND VERFAHREN ZUR ÜBERWACHUNG UND/ODER REGELUNG EINES SCHMIERZUSTANDES IN EINER KONTINUIERLICH ARBEITENDEN PRESSE**

(30) Priorität: 19.02.2016 DE 102016102931
(62) Teilanmeldung aus: 17705422.8
(71) Anmelder: DIEFFENBACHER GMBH Maschinen- und Anlagenbau, 75031 Eppingen (DE)
(72) Erfinder: Heymanns, Frank, 75031 Eppingen (DE)
(74) Vertreter: LBP Lemcke, Brommer & Partner Patentanwälte mbB

(57) **Zusammenfassung**

Die vorliegende Erfindung betrifft eine kontinuierlich arbeitende Presse (16) zur Herstellung von Werkstoffplatten, mit einem umlaufenden flexiblen Band (28) zum Transport von Pressgut (22) und zur Übertragung von Pressdruck auf das Pressgut (22) mit mindestens einem Sensor (11) zum Messen eines physikalischen Phänomens, das mit einer Schmiermittelmenge auf dem Band (28) zusammenhängt; und mit einer Vorrichtung (10) zur Überwachung eines Schmierzustands des umlaufenden flexiblen Bandes (28) mit einer Eingangsschnittstelle (12) zum Empfangen eines Messwerts von einem Sensor (11) in der Presse (16) und einer Auswerteeinheit (14) zum Ermitteln eines Schmierparameters als Kenngröße für eine Schmiermittelmenge auf dem Band (28) basierend auf dem Messwert des Sensors (11), wobei der Sensor (11) in Wirkverbindung mit dem Band (28), den Rollstangen (34), der Antriebstrommel (30) respektive dessen Antrieb, am Pressenrahmen (26) und/oder am Presszylinder (27) außerhalb des Pressbereiches (19), im Rücklauf des Bandes (28) oder der Rollstangen (34), bevorzugt im Auslaufbereich (20) zwischen Pressbereich (19) und Antriebswalze angeordnet ist. Die Erfindung betrifft weiterhin ein entsprechendes Verfahren zur Überwachung und/oder Regelung eines Schmierzustands eines umlaufenden flexiblen Bandes (28).

## Beschreibung

Die vorliegende Erfindung betrifft eine kontinuierlich arbeitende Presse zur Herstellung von Werkstoffplatten mit Vorrichtung zur Überwachung und/oder Regelung eines Schmierzustands eines umlaufenden flexiblen Bandes zum Transport von Pressgut und zur Übertragung von Pressdruck auf das Pressgut in einer kontinuierlich arbeitenden Presse zur Herstellung von Werkstoffplatten gemäß dem Patentanspruch 1. Die vorliegende Erfindung betrifft weiterhin ein Verfahren zur Überwachung und/oder Regelung nach dem Patentanspruch 14 und ein Computerprogrammprodukt nach Anspruch 15.

Bei der Herstellung von Werkstoffplatten aus streufähigen Material wird ein Gemisch aus Partikeln oder faserartigen Stoffen und einem Bindemittel zu einer Streugutmatte auf ein Form-oder Förderband (Streubandförderer) gestreut. Diese Streugutmatte wird anschließend nach einer gegebenenfalls erforderlichen Vorbehandlung einer kontinuierlichen oder diskontinuierlichen Verpressung zugeführt, die mittels Druck und/oder Wärme erfolgen kann. Beispielsweise können in dieser Art MDF-Platten (mitteldichte Faserplatten) oder OSB-Platten (Oriented Strand Board oder Grobspanplatten) hergestellt werden.

Die Verpressung erfolgt dabei zumeist in einer kontinuierlichen Bandpresse, in der eine Streugutmatte mittels eines umlaufenden flexiblen Bandes, insbesondere eines Stahlbandes, der Verpressung zugeführt wird. Üblicherweise übt eine Vielzahl von Presszylindern einen Pressdruck über das Band auf die Streugutmatte aus, während die Streugutmatte von Heizplatten erwärmt wird. Zwischen dem Band und den Presszylindern sind zumeist Rollstangen zur Verringerung der Reibung und zur Druckweitergabe angeordnet. Sowohl das Band als auch die Rollstangen werden dabei im umlaufenden Betrieb über Umlenkzylinder geführt und von Antriebswalzenangetrieben. Das Band ist flexibel, insofern als es über Rollen umgelenkt werden kann.

Während des Betriebs der Presse gleiten das Band sowie die sich um ihre Längsachsen drehenden Rollstangen an den ortsfesten Presszylindern und den Heizplatten vorbei. Hierbei entstehen Reibungskräfte, die durch eine Schmierung gering gehalten werden müssen. Üblicherweise wird Öl (Spezialöle) als Schmiermittel verwendet. Das Schmiermittel wird auf Bänder und/oder Rollstangen aufgebracht, wobei sowohl eine Unterschmierung (zu geringe Schmierung führt beispielsweise zu hoher Reibung und starkem Verschleiß) als auch eine Überschmierung (zu hoher Schmiermitteleintrag führt beispielsweise zu übermäßiger Verschmutzung und hohen Schmiermittelkosten) problematisch sein können.

In der Auslegung bisheriger Pressanlagen wird eine geeignete Ölmenge üblicherweise geschätzt, wobei dann während der Inbetriebnahmephase der Presse eine Feinabstimmung erfolgt. Insbesondere erfolgt die Feinabstimmung auf Basis eines visuellen Eindrucks der Restschmiermenge auf dem Stahlband am Auslauf der Presse. Diese Methode erfordert eine regelmäßige Inspektion und wiederkehrende Überwachungstätigkeit, da die richtige Ölmenge stark von den Produktionsparametern (Temperatur, Druck, Produktionsgeschwindigkeit, etc.) der jeweiligen Produktionscharge abhängt. Auch der Verschmutzungszustand respektive aufgelaufene Betriebsstunden des Gesamtsystems müssen berücksichtigt werden.

Derartige Pressen mit zugehörigen Schmiersystemen sind aus der DE 31 48 412 A1 bekannt geworden. Diese Presse wurde mit einer Weiterentwicklung nach DE 40 15 706 A1 verbessert. In DE 41 26 717 C1 wird weiter eine Pressanlage mit einer Schmiervorrichtung offenbart, wobei die Schmiervorrichtung dazu ausgebildet ist, einen Schmiermittelfilm eines flüssigen Schmiermittels auf die Stahlbänder und die Rollkörper aufzubringen. Die Schmiervorrichtung ist dabei einlaufseitig im Bereich der Rollkörperumlaufeinrichtung angeordnet und gibt das Schmiermittel an die Rollkörper ab, ehe diese die Pressbänder kontaktieren.

Die US 4,420,299 A offenbart eine kontinuierlich arbeitende Presse mit einem über die gesamte Breite des Pressbereiches erstreckenden Gleitbeleg, über welchen ein einlaufendes Band mit Hilfe eines unter Druck stehenden flüssigen Gleitbelags gleitet.

Die JP 2008 121170 A offenbart eine Schuhpressenvorrichtung zum Pressen und Entwässern von Papier, bei der ein energiesparender Betrieb bei geringer Leistung erreicht wird, indem ein in einem Spaltteil zwischen einem Gummituch und einem Pressschuh gebildeter Schmierölfilm in einem angemessenen Bereich gehalten wird.

Der vorliegenden Erfindung liegt die Aufgabe zugrunde, die Schmierung eines umlaufenden flexiblen Bandes in einer kontinuierlich arbeitenden Presse zu verbessern. Insbesondere soll einerseits eine übermäßige Verwendung von Schmiermittel verhindert werden und andererseits durch eine ausreichende Schmierung sichergestellt werden, dass die Komponenten der Presse nicht beschädigt werden und eine lange Lebensdauer haben.

Gemäß einem Aspekt betrifft die vorliegende Erfindung zur Lösung dieser Aufgabe eine kontinuierlich arbeitende Presse zur Herstellung von Werkstoffplatten mit einem umlaufenden flexiblen Band zum Transport von Pressgut und zur Übertragung von Pressdruck und mit mindestens einem Sensor zum Messen eines physikalischen Phänomens, das mit einer Schmiermittelmenge auf dem Band zusammenhängt und mit einer Vorrichtung zur Überwachung und/oder Regelung eines Schmierzustandes des umlaufenden flexiblen Bandes nach Anspruch 1.

Gemäß einem weiteren Aspekt betrifft die vorliegende Erfindung ein Verfahren zur Überwachung und/oder Regelung eines Schmierzustands eines umlaufenden flexiblen Bandes zum Transport von Pressgut und zur Übertragung von Pressdruck in einer kontinuierlich arbeitenden Presse zur Herstellung von Werkstoffplatten nach Anspruch 14.

Gemäß einem weiteren Aspekt betrifft die Erfindung ein Computerprogrammprodukt mit einem Datenträger, auf dem Programmcode gespeichert ist, der dazu ausgebildet ist, ein Verfahren mit den Schritten wie oben beschrieben auszuführen, wenn der Programmcode ausgeführt wird.

Bevorzugte Ausgestaltungen der Erfindung werden in den abhängigen Ansprüchen beschrieben. Es versteht sich, dass das Verfahren, die kontinuierlich arbeitende Presse und das Computerprogrammprodukt entsprechend der für die kontinuierlich arbeitende Presse in den abhängigen Ansprüchen beschriebenen Ausgestaltungen ausgeführt sein können.

Die erfindungsgemäße kontinuierliche Presse mit der Vorrichtung zur Überwachung eines Schmierzustandes umfasst eine Eingangsschnittstelle, die zur Kommunikation mit mindestens einem Sensor in der Presse ausgebildet ist. Über die Eingangsschnittstelle wird von diesem mindestens einen Sensor ein Messwert empfangen, der mit einer sich aktuell auf dem Band befindenden Schmiermittelmenge bzw. mit dem aktuellen Schmierzustand korreliert ist. Hierbei kommen eine Reihe von verschiedenen Sensoren infrage, die es erlauben einen Messwert zu liefern, der mit der Schmiermittelmenge auf dem Band zusammenhängt. Es versteht sich, dass es hierbei auch möglich und für eine höhere Zuverlässigkeit gegebenenfalls vorteilhaft ist, dass mehrere Messwerte von einem, mehreren und/oder verschiedenen Sensoren empfangen werden. Verschiedene physikalische Phänomene hängen von der Schmiermittelmenge bzw. von dem Schmierzustand des Bandes und der gesamten Maschine ab. Die Eingangsschnittstelle kann dabei sowohl in Soft- als auch in Hardware ausgeführt sein. Beispielsweise kann es sich um eine entsprechende hardwaremäßige Sensoranbindung im Sinne eines entsprechenden Anschlusses handeln.

Basierend auf dem empfangenen Messwert wird in einer Auswerteeinheit ein Schmierparameter ermittelt bzw. berechnet. Der Schmierparameter stellt eine Kenngröße für eine Schmiermittelmenge auf dem Band dar. In der Auswerteeinheit wird der empfangene Messwert verarbeitet und interpretiert. Eigenschaften einer bestimmten Art von Sensor können berücksichtigt und kompensiert werden. Hierbei ist es möglich, dass weitere Informationen berücksichtigt werden. Beispielsweise können vordefinierte Werte, insbesondere aus pressenspezifischen Wertetabellen, mit einfließen. Der Schmierparameter erlaubt eine Aussage bezüglich der Schmiermittelmenge auf dem Band. Durch eine Überwachung eines Zeitverlaufs des Schmierparameters wird daher auch eine Aussage bezüglich des Schmiermittelverbrauchs ermöglicht. Insbesondere kann dies die Lager- respektive die Vorratshaltung des Schmiermittels vereinfachen oder automatisieren.

Die erfindungsgemäße Vorrichtung kann beispielsweise in einer Doppelbandpresse oder in einer Einbandpresse (Kalander Presse) verwendet werden. Dabei kann die Vorrichtung in eine Pressensteuerung integriert werden oder als separates Modul ausgeführt sein. Beispielsweise ist es möglich, dass der Schmierparameter in Echtzeit basierend auf dem aktuellen Betrieb der Presse in der Pressensteuerung ermittelt wird. Besonders bevorzugt wird das Band oder die Bänder gegenüber feststehenden Lagern oder Heizplatten mittels mitumlaufenden Rollstangen abgestützt, die ebenfalls im Kontakt mit dem Schmiermittel stehen.

Dementsprechend arbeitet die erfindungsgemäße kontinuierlich arbeitende Presse auf Basis der oben beschriebenen Vorrichtung. In der Presse wird das Streugut durch ein umlaufendes flexibles Band, insbesondere ein Stahlband, transportiert. Durch dieses Stahlband wird das Pressgut der Verpressung zugeführt. Durch dieses Stahlband wird der Pressdruck auf das Pressgut übertragen. In der Presse ist ein Sensor integriert, mit dem ein physikalisches Phänomen beobachtet werden kann, das mit einer Schmiermittelmenge auf dem Band zusammenhängt. Dieser Sensor steht in Verbindung mit der oben beschriebenen erfindungsgemäßen Vorrichtung. Insbesondere erhält die Vorrichtung von dem Sensor in der Presse einen Messwert, auf dessen Basis der Schmierparameter berechnet werden kann.

Das erfindungsgemäße Verfahren kann beispielsweise als Betriebsverfahren zur Ausführung in einer Pressensteuerung umgesetzt sein. Beispielsweise kann basierend auf Sensordaten gearbeitet werden, die ohnehin in der Pressensteuerung vorhanden sind, sodass die Verwendung des erfindungsgemäßen Verfahrens in Form einer Software für die Pressensteuerung erfolgen kann.

Im Vergleich zu bisherigen manuellen Methoden zur Ermittlung des Schmierzustandes, erlaubt die kontinuierliche Presse mit der Vorrichtung der vorliegenden Erfindung eine bisher nicht bekannte automatische Überwachung bzw. Verfolgung des Schmierzustandes der Presse. Hierdurch werden Ungenauigkeiten und falsche Einschätzungen, wie sie bei einer manuellen Überwachung auftreten können, vermieden. Es wird ermöglicht, dass eine präzise, objektive und personenunabhängige Einschätzung des Schmierzustandes vorgenommen wird. Es kann einerseits erkannt werden, wenn zu viel Schmiermittel verwendet wird und eine Überschmierung zu einer übermäßigen Verschmutzung der Presse und/oder der Umgebung und/oder des zu fertigenden Produkts führt. Andererseits kann vermieden werden, dass aufgrund einer zu geringen Schmierung (Unterschmierung) eine zu hohe Reibung auftritt, aufgrund derer sich die für den Antrieb des Bandes notwendige Kraft erhöht, was zu einem erhöhten Stromverbrauch führen kann, und aufgrund derer es ebenfalls zu Schäden bzw. zu erhöhtem Verschleiß am Band oder an anderen Teilen kommen kann.

In bisherigen Ansätzen erfolgt die Einstellung der Schmiermittelmenge zumeist basierend auf festgelegten Parametern der aktuellen Produktion sowie der Presse an sich. Der erfindungsgemäße Ansatz besteht darin, dass zumindest ein Sensorwert, also ein Wert, der sich im laufenden Betrieb der Presse abhängig vom Schmierzustand der Presse ändert, berücksichtigt wird. Hierdurch kann im laufenden Betrieb auf wechselnde Bedingungen, insbesondere auf die Produktion verschiedener Produkte, reagiert werden. Ebenfalls werden Warnungen im laufenden Betrieb ermöglicht, durch die eine unmittelbare Reaktion auf einen geänderten Schmierzustand erfolgen kann. Folglich kann der Schmiermitteleinsatz optimiert werden.

Gemäß einer bevorzugten Ausgestaltung umfasst die Vorrichtung eine allgemeine Schnittstelle zur Weitergabe von Daten. Besonders bevorzugt ist diese Schnittstelle eine Benutzerschnittstelle zum Bereitstellen einer Statusinformation an einen Maschinenführer der Presse auf Basis des Schmierparameters. Diese Statusinformation kann insbesondere direkt dem ermittelten Schmierparameter entsprechen. Es ist ebenfalls möglich, dass die Statusinformation auf Basis weiterer Eingangswerte, die beispielsweise vordefiniert sein können, ermittelt wird. Durch das Bereitstellen der Statusinformationen an einen Maschinenführer wird ermöglicht, dass dieser Maschinenführer über den aktuellen Zustand informiert ist und auf Veränderungen unmittelbar reagieren kann, bevor es zu Problemen aufgrund einer Unter- oder Überschmierung kommt. Der Maschinenführer bezeichnet in diesem Zusammenhang einen menschlichen Bediener der Maschine, der nicht notwendigerweise vor Ort bei der Presse sein muss, sondern sich ebenfalls in einer zentralen Überwachungseinheit aufhalten kann. Ebenfalls kann auch ein entsprechendes Kontroll- oder Überwachungssystem informiert werden.

In einer Ausgestaltung ist die Benutzerschnittstelle zur Alarmierung des Maschinenführers, wenn der Schmierparameter einen vordefinierten oberen Schwellwert überschreitet und/oder wenn der Schmierparameter einen vordefinierten unteren Schwellwert unterschreitet, ausgebildet. Vorteilhaft ist es, wenn der Maschinenführer alarmiert wird, sobald es zu einem ungewöhnlichen bzw. unnormalen Zustand kommt. Wenn der Schmierparameter einen durch einen unteren sowie einen oberen Schwellwert definierten Bereich verlässt, wird dies durch ein Warnsignal angezeigt, durch das der Maschinenführer informiert wird. Die Schwellwerte können beispielsweise während einer Kalibrierung ermittelt oder aus Erfahrungswerten vordefiniert sein. Das Warnsignal kann hierbei zum einen als binäres Signal ausgeführt werden, durch das lediglich eine Warnung kommuniziert wird (akustischer Warnton, optische Warnanzeige etc.), und andererseits auch als komplexeres Signal (prozentuale Anzeige, Farbanzeige etc.) ausgeführt werden, durch das ebenfalls eine Information bezüglich der aktuellen Schmierölmenge transportiert wird. Die Überwachung der Presse wird wesentlich vereinfacht.

In einer bevorzugten Ausgestaltung umfasst die Vorrichtung weiterhin eine Regeleinrichtung zur Regelung einer mittels einer Schmiereinheit zum Aufbringen von Schmiermittel auf das Band aufgebrachten Schmiermittelmenge basierend auf dem Schmierparameter. Durch das Vorsehen einer Regeleinrichtung kann ein Regelkreis realisiert werden, in dem auf Basis des ermittelten Schmierparameters die aufgebrachte Schmiermittelmenge gesteuert wird. Wenn der Schmierparameter eine zu geringe Schmiermittelmenge auf dem Band anzeigt, kann die Schmiermittelmenge, die von der Schmiereinheit ausgegeben wird, erhöht werden und umgekehrt. Die Regeleinrichtung ist hierbei insbesondere als zusätzliches Modul in die erfindungsgemäße Vorrichtung integriert. Durch die Regeleinrichtung wird es ermöglicht, dass auf Schwankungen im Schmiermittelverbrauch bzw. auf eine drohende Unter- oder Überschmierung reagiert werden kann. Beispielsweise kann eine Echtzeitreaktion umgesetzt werden. Demnach wird die verwendete Schmierung weiter optimiert.

In einer weiteren bevorzugten Ausgestaltung ist die Eingangsschnittstelle zum Empfangen eines Messwerts von einem Sensor zum Messen eines physikalischen Phänomens im Auslauf der Presse ausgebildet. Der Sensor im Auslauf der Presse, also im hinteren Bereich, in dem die gepressten Werkstoffplatten die Presse verlassen, ermöglicht es, dass die Messung der Schmiermittelmenge an einer Stelle vorgenommen wird, an der diese minimal ist. In vorteilhafter Weise wird das Schmiermittel oder der Schmierzustand in dem Bereich gemessen, der dem Hauptanwendungszweck des Schmiermittels, dem Pressbereich, nachgeordnet ist. Ist das Schmiermittel noch ausreichend vorhanden, so wurde im Einlauf der Presse genug Schmiermittel aufgetragen. Ist es zu wenig muss der Eintrag erhöht werden vice versa wird er verringert, wenn noch zu viel Schmiermittel gemessen wird.

Besonders bevorzugt wird eine Stelle zur Messung durch den Sensor ausgewählt, die in Transportrichtung des Bandes möglichst nahe am Pressbereich bzw. an der Stelle ist, an der sich die Rollstangen vom Band ablösen, bevor das Band oder die Rollstangen mit anderen mechanischen Elementen in Kontakt kommen und das Ergebnis verfälschen könnten. Beispielsweise wäre die Messung nach einem Schaber für überflüssiges Öl nicht unbedingt zu bevorzugen, aber insbesondere mit Verwendung eines Korrekturfaktors, möglich. Im Übrigen könnte ein entsprechender Sensor auch die in der Presse üblicherweise vom Stahlband abgeschabte Menge an Schmiermittel pro Zeit vermessen und aus der Menge einen Rückschluss auf den Schmierparameter durchführen.

In einer Ausgestaltung ist die Eingangsschnittstelle zum Empfangen eines Messwerts von
- einem ersten Lichtsensor zum Messen eines Lichtreflektionswertes des Bandes und/oder einer Rollstange der Presse;
- einem Leitfähigkeitssensor zum Messen eines Leitfähigkeitswertes des Bandes und/oder einer Rollstange der Presse;
- einem zweiten Lichtsensor zum Messen eines Lichtabsorptionswertes des Bandes und/oder einer Rollstange der Presse;
- einem Laserabstandssensor zum Messen einer Schichtdicke eines Schmiermittelfilms auf dem Band und/oder auf einer Rollstange der Presse; und/oder
- einem Ultraschallsensor zum Messen eines Schallreflektionswertes des Bandes und/oder einer Rollstange der Presse
ausgebildet. In der Ausführung als Lichtsensor muss nicht zwingend für das menschliche Auge sichtbares Licht verwendet werden. Unter einem Lichtsensor fällt beispielsweise auch eine laserinduzierte Fluoreszenspektroskopie mittels hochgepulster Laserstrahlung.

Verschiedene Sensoren können in der Presse angeordnet sein. Alle oben genannten Sensoren erlauben unabhängig voneinander eine Aussage bezüglich der vorhandenen Schmiermittelmenge und damit bezüglich des Schmierzustandes der Presse. Es können also Sensoren verwendet werden, die den Schmierzustand bzw. die Schmiermittelmenge auf dem Band direkt messen. Hierdurch lässt sich der Schmiermittelverbrauch messen. Die Sensoren werden separat, also zur Verwendung für die Messung des Schmierzustandes in die Presse integriert. Dabei ist es möglich, dass die Sensoren direkt mit der erfindungsgemäßen Vorrichtung in Kontakt sind oder auch mittelbar, über ein weiteres Modul, beispielsweise über eine Pressensteuerung, respektive einer mit der Eingangsschnittstelle in Verbindung stehen.

In einer weiteren bevorzugten Ausgestaltung ist die Eingangsschnittstelle zur Kommunikation mit einer Pressensteuerung und zum Empfangen von in der Pressensteuerung verfügbaren Daten, respektive der Kontrolleinrichtung der Presse, ausgebildet. Zusätzlich oder alternativ zu den Messwerten verschiedener Sensoren, die, wie zuvor beschrieben, zur speziellen Verwendung in der Ermittlung des Schmiermittelverbrauchs zusätzlich in eine Presse integriert werden, ist es ebenfalls möglich, auf bereits vorhandene Sensorik zurückzugreifen. In einer Presse sind üblicherweise bereits verschiedene Sensoren oder sensorähnliche Anordnungen integriert, durch die verschiedene Prozessparameter überwacht werden. Die Messwerte diese Sensoren können in einer erfindungsgemäßen Vorrichtung verwendet werden. Hierbei ist es insbesondere vorteilhaft, dass es nicht notwendig ist, weitere separate Sensoren vorzusehen. Sensoren bzw. sensorartige Einrichtungen und der Daten, die ohnehin in der Presse integriert sind, werden verwendet. Daher kann eine einfache Integration der erfindungsgemäßen Vorrichtung in eine bereits vorhandene Presse erfolgen.

Bevorzugt ist die Eingangsschnittstelle zum Empfangen eines Messwerts von einem Kraftsensor zum Messen der Presskraft zumindest an einem Presszylinder oder zumindest an einem Pressenrahmen in der Presse;
einer Summiervorrichtung für die empirisch ermittelten und/oder gemessenen Presskräfte in der Presse respektive dem Pressbereich der Presse und/oder
einem Leistungssensor zum Messen einer Antriebsleistung an der Antriebswalze oder deren zugehörigem Antrieb zum Antreiben des Bandes in der Presse ausgebildet ist.

Insbesondere kann vorgesehen werden, dass die Eingangsschnittstelle zum Empfangen von einem oder mehreren Messwerten ausgebildet sind, wobei die Messwerte dazu geeignet sind die Verdichtungsarbeit, die Zugkraft an den Bändern und/oder die Summenkraft aller Presszylinder, bevorzugt der Presszylinder die an der Verdichtungsarbeit des Pressgutes beteiligt sind, zu bestimmen.

In einer weiteren Ausgestaltung ist die Auswerteeinheit zum Ermitteln des Schmierparameters als Quotient aus einer Antriebsleistung einer Antriebswalze zum Antreiben des Bandes und zumindest einer Presskraft eines Presszylinders in der Presse ausgebildet. Dieser Quotient ist eine Kenngröße für die Verdichtungsarbeit, die aktuell von der Presse geleistet wird. Der Quotient entspricht einem Maschinenreibwert, über den eine Aussage bezüglich der aktuellen Reibungseigenschaften der Presse getroffen werden kann.

Besonders bevorzugt wird in der Auswerteeinheit zum Ermitteln des Schmierparameters der Quotient der Zugkraft der Stahlbänder unter Berücksichtigung der Verdichtungsarbeit und der Normalkraft der Presse ausgebildet.

Eine hohe Reibung ist ein Indiz für eine geringe Schmierung. Sobald die Reibung über eine vorgegebene Grenze steigt, sollte der Schmiermitteleintrag nachgeregelt bzw. erhöht werden. Daher kann der Quotient als Korrekturfaktor verwendet werden, durch den die aktuellen Prozessparameter widergespiegelt sind. Dies hat den Vorteil, dass eine aussagekräftige Information bezüglich des aktuellen Schmierzustandes bereitgestellt werden kann.

In einer bevorzugten Ausgestaltung ist die Eingangsschnittstelle zum Empfangen eines Pressenparameters als Kenngröße für eine Eigenschaft oder Einstellung der Presse, insbesondere einer Geometrie und/oder Länge des Pressspaltes, eines Elements der Presse, einer Temperatur einer Heizplatte, einer Dicke, Breite oder Beschaffenheit des Pressgutes und/oder einer Transportgeschwindigkeit des Bandes in der Presse, ausgebildet; und ist die Auswerteeinheit zum Ermitteln des Schmierparameters basierend auf dem Pressenparameter ausgebildet.

Es ist möglich, dass zusätzlich zu einem oder mehreren Messwerten von einem oder mehreren Sensoren noch ein oder mehrere Pressenparameter bei der Ermittlung des Schmierparameters berücksichtigt werden. Ein Pressenparameter bezeichnet hierbei eine Einstellung der Presse oder der aktuellen Produktion. Durch die zusätzliche Berücksichtigung eines Pressenparameters, kann die Genauigkeit bei der Bestimmung des Schmierparameters weiter erhöht werden. Insbesondere bei einer indirekten Abschätzung der Schmiermittelmenge ohne einen unmittelbaren Sensor zur Abschätzung der Schmiermittelmenge auf dem Band, können Besonderheiten der aktuellen Produktion berücksichtigt werden und dadurch die Aussagekraft des Schmierparameters erhöht werden.

In einer bevorzugten Ausgestaltung ist die Auswerteeinheit zum Ermitteln des Schmierparameters basierend auf einem vordefinierten Referenzwert ausgebildet ist. Der Referenzwert wird zusätzlich zu dem Messwert berücksichtigt. Beispielsweise kann für jeden Messwert eines Sensors ein entsprechender vordefinierter Referenzwert vorhanden sein, der in einer Kalibrierung der Presse ermittelt wurde. Ebenfalls kann ein Referenzwert für einen auf Basis der Messwerte ermittelten Zwischenwert vorhanden sein. Ein Referenzwert kann beispielsweise eine Aussage bezüglich einer normalen oder optimalen Schmiermittelmenge auf dem Band und/oder bezüglich eines gewöhnlichen Verhaltens des Bandes bzw. der Presse beinhalten. Durch einen Vergleich mit einem Referenzwert wird eine einfache Aussage bezüglich eine Über- oder Unterschmierung des Bandes ermöglicht. Es versteht sich dabei, dass der Referenzwert sowohl bei der Ermittlung des Schmierparameters als auch bei der darauf basierenden Weiterverarbeitung berücksichtigt werden kann. Beispielsweise kann ein Schmierparameter, der auf Basis eines Referenzwertes ermittelt wurde, einer prozentualen Abweichung von dieser Referenz entsprechen.

In einer bevorzugten Ausgestaltung der erfindungsgemäßen kontinuierlich arbeitenden Presse umfasst diese Presse weiterhin:
eine steuerbare Schmiereinheit zum Aufbringen von Schmiermittel, bevorzugt auf das Band und/oder die Rollstangen; und
eine Regeleinrichtung zur Regelung einer von der Schmiereinheit aufgebrachten Schmiermittelmenge basierend auf dem Schmierparameter.

Üblicherweise verfügt eine kontinuierlich arbeitende Presse über eine entsprechende Schmiereinheit, mit der Schmiermittel auf das Band aufgetragen werden kann. Diese Schmiereinheit ist in Kommunikation mit einer Regeleinrichtung in der erfindungsgemäßen Vorrichtung und wird von dieser gesteuert. Insbesondere wird die Menge des aufgebrachten Schmiermittels geregelt. Folglich wird ein Regelkreis realisiert, bei dem die Schmiermittelmenge automatisch auf einem optimalen bzw. gewünschten Niveau gehalten wird.

Erfindungsgemäß ist der Sensor in Wirkverbindung mit dem Band, den Rollstangen, der Antriebstrommel respektive dessen Antrieb, am Pressenrahmen und/oder am Presszylinder angeordnet. Der Sensor kann dabei als Licht-, Leitfähigkeits-, Laserabstands-, Ultraschall-, Druck-, Zug-, Leistungs- und/oder Kraftsensoren ausgebildet sein.

In dem genannten Regelkreis wird als Schmierzustand die Versorgung des tribologischen Systems aus Heizplatten, Rollstangen und einem oder mehreren Bändern in einer kontinuierlich arbeitenden Presse mit Schmiermittel verstanden. Der Schmierzustand ist nicht notwendigerweise synonym zu einer gesamten Schmiermittelmenge in der Presse zu verstehen, da es auch möglich sein kann, dass zwar ausreichend Schmiermittel vorhanden ist, dieses jedoch nicht an der richtigen Stelle zum Einsatz kommt. Durch eine Überwachung des Verlaufs des Schmierzustandes über die Zeit bzw. des Schmierparameters kann auch eine Aussage über den Schmiermittelverbrauch der Presse getroffen werden. Der Schmierzustand kann daher teilweise synonym zum Schmiermittelverbrauch verwendet werden.

In Abhängigkeit der Pressenbreite und weiterer Geometrieparameter ist die Schmiermenge auf einen Verteilerkreis oder, ab gewissen Breiten, auf zwei oder sogar mehr Verteilerkreise aufgeteilt. Sind zumindest zwei Verteilerkreise vorhanden, kann zudem zwischen der Schmiermenge in der Mitte und am Rand unterschieden werden. Eine Reduzierung der Schmiermenge am Rand hilft gegen starke Verschmutzung der Antriebswalzen im Außenbereich. Allerdings führt eine Unterschmierung auch leicht zu Schäden an den Abrollplatten, Rollstangen und Stahlbändern bis hin zu Korrosion der Abrollplatte. Eine Messung kann beispielsweise basierend auf Sensoren in den einzelnen Abschnitten des Bandes, in der Mitte, am Rand oder in mehreren Zwischenstufen, erfolgen.

Alternativ oder in Kombination kann auch vorgesehen werden, dass mittels eines vorgespannten Gleitkörpers am Band, ggfs. einer oder mehrere über die Breite, die Reibung bzw. die Schubkraft des Bandes auf den Gleitkörper gemessen wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der Gegenstand der Anmeldung bezieht sich ferner auf die folgenden weiteren Ausführungsbeispiele:
Beispiel 1. Vorrichtung zur Überwachung und/oder Regelung eines Schmierzustands eines umlaufenden flexiblen Bandes zum Transport von Pressgut und zur Übertragung von Pressdruck auf das Pressgut in einer kontinuierlich arbeitenden Presse zur Herstellung von Werkstoffplatten, mit: einer Eingangsschnittstelle zum Empfangen eines Messwerts von einem Sensor in der Presse, wobei der Sensor zum Messen eines physikalischen Phänomens ausgebildet ist, das mit einer Schmiermittelmenge auf dem Band zusammenhängt; und einer Auswerteeinheit zum Ermitteln eines Schmierparameters als Kenngröße für eine Schmiermittelmenge auf dem Band basierend auf dem Messwert des Sensors.
Beispiel 2. Vorrichtung nach Beispiel 1, weiterhin umfassend eine Datenschnittstelle oder bevorzugt eine Benutzerschnittstelle zum Bereitstellen einer Statusinformation an einen Maschinenführer der Presse auf Basis des Schmierparameters, wobei die Benutzerschnittstelle insbesondere zur Alarmierung des Maschinenführers, wenn der Schmierparameter einen vordefinierten oberen Schwellwert überschreitet und/oder wenn der Schmierparameter einen vordefinierten unteren Schwellwert unterschreitet, ausgebildet ist.
Beispiel 3. Vorrichtung nach einem der vorstehenden Beispiele, weiterhin umfassend eine Regeleinrichtung zur Regelung einer mittels einer Schmiereinheit auf das Band aufgebrachten Schmiermittelmenge basierend auf dem Schmierparameter.
Beispiel 4. Vorrichtung nach einem der vorstehenden Beispiele wobei die Eingangsschnittstelle zum Empfangen eines Messwerts von einem Sensor, ausgebildet als
   ein Lichtsensor zum Messen eines Lichtreflektionswertes des Bandes und/oder einer Rollstange der Presse;
   ein Leitfähigkeitssensor zum Messen eines Leitfähigkeitswertes des Bandes und/oder einer Rollstange der Presse;
   ein Lichtsensor zum Messen eines Lichtabsorptionswertes des Bandes und/oder einer Rollstange der Presse;
   ein Laserabstandssensor zum Messen einer Schichtdicke eines Schmiermittelfilms auf dem Band und/oder auf einer Rollstange der Presse; und/oder
   ein Ultraschallsensor zum Messen eines Schallreflektionswertes des Bandes und/oder einer Rollstange der Presse.
Beispiel 5. Vorrichtung nach einem der vorstehenden Beispiele, wobei zumindest Teile der Vorrichtung, wie die Eingangsschnittstelle, die Auswerteeinheit und/oder die Regeleinrichtung zur Kommunikation mit einer Pressensteuerung und zum Empfangen von in der Pressensteuerung verfügbaren Daten, bevorzugt mit der Kontrolleinrichtung der Presse, ausgebildet ist.
Beispiel 6. Vorrichtung nach einem der vorstehenden Beispiele, wobei die Eingangsschnittstelle zum Empfangen eines Messwerts von einem Kraftsensor zum Messen der Presskraft zumindest an einem Presszylinder oder zumindest an einem Pressenrahmen in der Presse;
   einer Summiervorrichtung für die empirisch ermittelten und/oder gemessenen Presskräfte in der Presse respektive dem Pressbereich der Presse und/oder
   einem Leistungssensor zum Messen einer Antriebsleistung an der Antriebswalze oder deren zugehörigem Antrieb zum Antreiben des Bandes in der Presse ausgebildet ist.
Beispiel 7. Vorrichtung nach einem der vorstehenden Beispiele, wobei die Auswerteeinheit zum Ermitteln des Schmierparameters aus dem Quotienten der Antriebsleistung und der Presskraft der Presse ausgebildet ist.
Beispiel 8. Vorrichtung nach einem der vorstehenden Beispiele, wobei die Eingangsschnittstelle zum Empfangen von einem oder mehreren Messwerten ausgebildet sind, wobei die Messwerte dazu geeignet sind die Verdichtungsarbeit, die Zugkraft an den Bändern und/oder die Summenkraft aller Presszylinder, bevorzugt der Presszylinder die an der Verdichtungsarbeit des Pressgutes beteiligt sind, zu bestimmen.
Beispiel 9. Vorrichtung nach einem der vorstehenden Beispiele, wobei die Auswerteeinheit zum Ermitteln des Schmierparameters der Quotient der Zugkraft der Stahlbänder unter Berücksichtigung der Verdichtungsarbeit und der Normalkraft der Presse ausgebildet ist.
Beispiel 10. Vorrichtung nach einem der vorstehenden Beispiele, wobei die Eingangsschnittstelle zum Empfangen eines Pressenparameters als Kenngröße für eine Eigenschaft oder Einstellung der Presse, insbesondere einer Geometrie und/oder Länge des Pressspaltes, eines Elements der Presse, einer Temperatur einer Heizplatte, einer Dicke, Breite oder Beschaffenheit des Pressgutes und/oder einer Transportgeschwindigkeit des Bandes in der Presse, ausgebildet ist; und die Auswerteeinheit zum Ermitteln des Schmierparameters basierend auf dem Pressenparameter ausgebildet ist.
Beispiel 11. Vorrichtung nach einem der vorstehenden Beispiele, wobei die Auswerteeinheit zum Ermitteln des Schmierparameters basierend auf einem vordefinierten Referenzwert ausgebildet ist.
Beispiel 12. Kontinuierlich arbeitende Presse zur Herstellung von Werkstoffplatten, mit:
   einem umlaufenden flexiblen Band zum Transport von Pressgut und zur Übertragung von Pressdruck auf das Pressgut;
   mindestens einem Sensor zum Messen eines physikalischen Phänomens, das mit einer Schmiermittelmenge auf dem Band zusammenhängt; und einer Vorrichtung nach einem der vorstehenden Beispiele 1 bis 11.
Beispiel 13. Kontinuierlich arbeitende Presse nach Beispiel 12, weiterhin umfassend:
   eine steuerbare Schmiereinheit zum Aufbringen von Schmiermittel, bevorzugt auf das Band und/oder die Rollstangen; und
   eine Regeleinrichtung zur Regelung einer von der Schmiereinheit aufgebrachten Schmiermittelmenge basierend auf dem Schmierparameter.
Beispiel 14. Kontinuierlich arbeitende Presse nach einem der Beispiele 12 bis 13, dadurch gekennzeichnet, dass der Sensor in Wirkverbindung mit dem Band, den Rollstangen, der Antriebstrommel respektive dessen Antrieb, am Pressenrahmen und/oder am Presszylinder angeordnet ist.
Beispiel 15. Kontinuierlich arbeitende Presse nach einem der Beispiele 12 bis 13, dadurch gekennzeichnet, dass der Sensor außerhalb des Pressbereiches, im Rücklauf des Bandes oder der Rollstangen, besonders bevorzugt im Auslaufbereich zwischen Pressbereich und Antriebswalze, angeordnet ist.
Beispiel 16. Kontinuierlich arbeitende Presse nach einem der Beispiele 12 bis 13, dadurch gekennzeichnet, dass als Sensoren Licht-, Leitfähigkeits-, Laser-, Ultraschall-, Druck-, Zug-, Leistungs- und/oder Kraftsensoren angeordnet sind.
Beispiel 17. Kontinuierlich arbeitende Presse nach einem der Beispiele 12 bis 13, dadurch gekennzeichnet, dass der Sensor geeignet ist über die Breite des Bandes abschnittsweise zu messen und/oder die Schmiervorrichtung geeignet ist über die Breite des Bandes abschnittsweise unterschiedliche Schmiermittelmengen abzugeben.
Beispiel 18. Verfahren zur Überwachung und/oder Regelung eines Schmierzustands eines umlaufenden flexiblen Bandes zum Transport von Pressgut und zur Übertragung von Pressdruck auf das Pressgut in einer kontinuierlich arbeitenden Presse zur Herstellung von Werkstoffplatten, mit den Schritten:
   Empfangen eines Messwerts von einem mit der Presse in Wirkverbindung stehenden Sensor, wobei der Sensor zum Messen eines physikalischen Phänomens ausgebildet ist, das mit einer Schmiermittelmenge auf dem Band zusammenhängt; und
   Ermitteln eines Schmierparameters als Kenngröße für eine Schmiermittelmenge auf dem Band basierend auf dem Messwert des Sensors.
Beispiel 19. Computerprogrammprodukt mit einem Datenträger, auf dem Programmcode gespeichert ist, der dazu ausgebildet ist, ein Verfahren mit den Schritten nach Beispiel 18 auszuführen, wenn der Programmcode ausgeführt wird.

Die Erfindung wird nachfolgend anhand einiger ausgewählter Ausführungsbeispiele im Zusammenhang mit den beiliegenden Zeichnungen näher beschrieben und erläutert. Es zeigen:
- Fig. 1: eine schematische Darstellung einer Vorrichtung gemäß einem Aspekt der vorliegenden Erfindung;
- Fig. 2: eine schematische Darstellung einer Regelung einer Schmiervorrichtung durch eine erfindungsgemäße Vorrichtung;
- Fig. 3: eine schematische Darstellung einer kontinuierlich arbeitenden Presse in ihrem Einlaufbereich und
- Fig. 4: eine schematische Darstellung einer kontinuierlich arbeitenden Presse in ihrem Auslaufbereich.

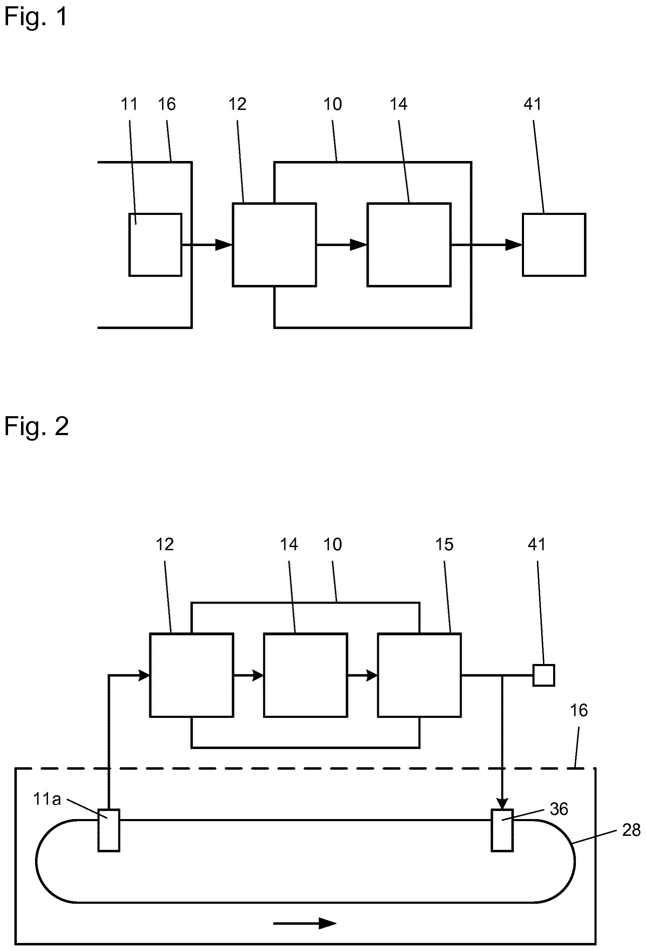

In Figur 1 ist eine schematische Darstellung einer Vorrichtung 10 zur Überwachung eines Schmierzustandes eines umlaufenden flexiblen Bandes 28 zum Transport von Pressgut 22 und zur Übertragung von Pressdruck in einer kontinuierlich arbeitenden Presse 16 zur Herstellung von Werkstoffplatten gemäß einem Aspekt der vorliegenden Erfindung gezeigt. Die Vorrichtung 10 umfasst eine Eingangsschnittstelle 12, die mit einem Sensor 11 in Kommunikation steht und von diesem einen Messwert empfängt. Hierbei ist der Sensor 11 zum Messen eines physikalischen Phänomens ausgebildet, das mit einer Schmiermittelmenge auf dem Band 28 in der Presse zusammenhängt. Weiterhin umfasst die Vorrichtung 10 eine Auswerteeinheit 14, mittels derer auf Basis des von dem Sensor 11 erhaltenen Messwerts ein Schmierparameter ermittelt wird. Der Schmierparameter steht für eine Weiterverwendung oder Weiterverarbeitung zur Überwachung des Schmierzustandes zur Verfügung. Beispielsweise kann der Schmierparameter in einer Kontrolleinrichtung, besonders bevorzugt im Leitstand der Gesamtanlage respektive der Presse angezeigt und/oder dort weiter verarbeitet werden.

Die erfindungsgemäße Vorrichtung 10 ist für eine Verwendung in einer kontinuierlich arbeitenden Presse 16 zur Herstellung von Werkstoffplatten (beispielsweise MDF-Platten oder OSB-Platten) geeignet.

Es versteht sich, dass die im Folgenden beschriebene Anwendung der vorliegenden Erfindung im Zusammenhang mit einer Doppelbandpresse beispielhaft und nicht einschränkend zu verstehen ist. Die Erfindung kann ebenfalls und in entsprechender Weise bei anders aufgebauten Pressen 16 eingesetzt werden. Beispielsweise kann die vorliegende Erfindung auch bei Mende-/Kalanderpressen, bei denen ein einzelnes Band 28 eine große Druckwalze teilweise umschließt, und mit denen üblicherweise insbesondere Dünnplatten, beispielsweise unter 5 mm Dicke, hergestellt werden, eingesetzt werden.

In der Fig. 2 ist ein mittels einer Regeleinrichtung 15 in einer erfindungsgemäßen Vorrichtung 10 realisierter Regelkreis schematisch dargestellt. In der Vorrichtung 10 wird die Eingangsschnittstelle 12 ein Messwert von einem Sensor 11 empfangen. Der Sensor 11 ist zum Messen eines physikalischen Phänomens, das mit einer Schmiermittelmenge auf einem Band 28 in einer kontinuierlichen Presse 16 zusammenhängt, ausgebildet und in diesem Ausführungsbeispiel mit dem Band 28 wirkverbunden. In der Auswerteeinheit 14 der Vorrichtung 10 wird ein Schmierparameter als Eingang für die Regeleinrichtung 15 ermittelt, auf dessen Basis dann die abzugebende Schmiermittelmenge (pro Zeiteinheit) einer Schmiereinheit 36 angepasst werden kann. Die Schmiereinheit 36 ist steuerbar insofern, als die von ihr aufgebrachte Schmiermittelmenge angepasst werden kann. Diese Schmiermittelmenge wirkt sich dann wieder auf die Schmiermittelmenge auf dem Band 28 aus, die mit dem Sensor 11a gemessen wird. Daher ergibt sich ein Regelkreis. Neben der Regelung der Schmiereinheit 36 ist unter Umständen vorgesehen, dass die Regelung oder Überwachung an einer Kontrolleinheit 41 visualisiert wird.

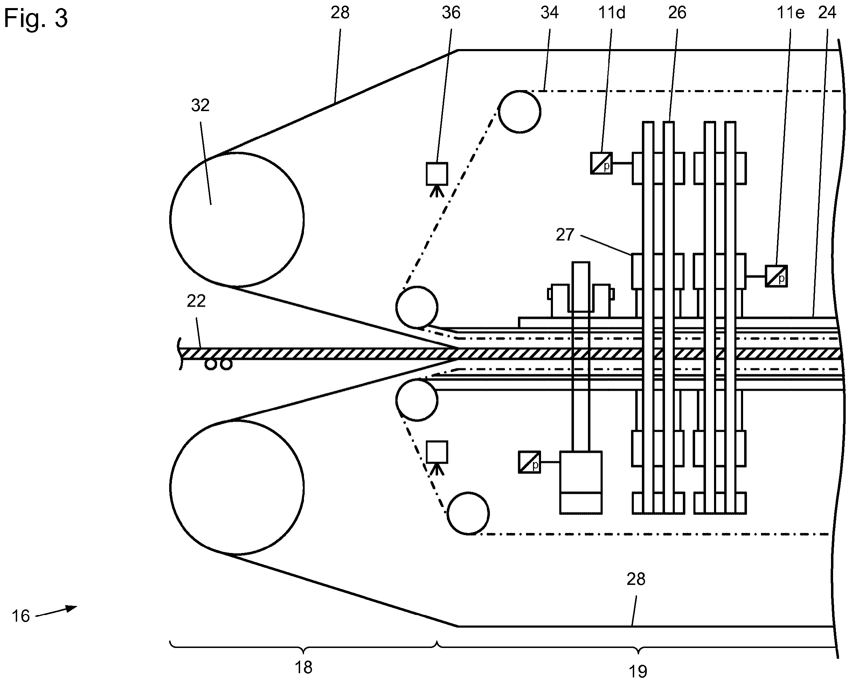

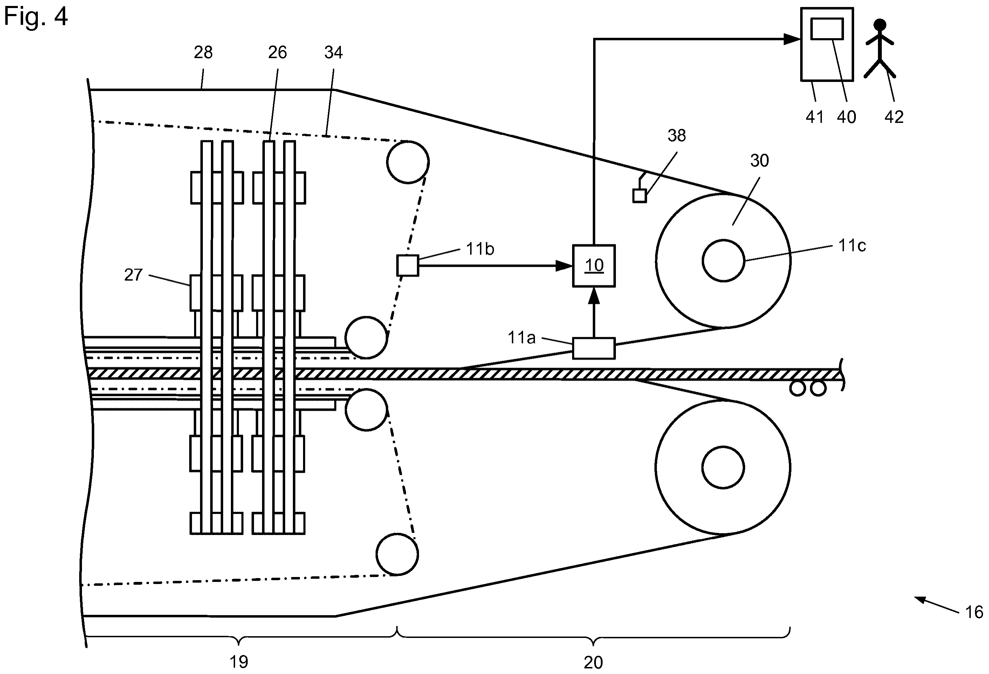

In den Figuren 3 und 4 ist beispielhaft eine kontinuierlich arbeitende Presse 16 in einer schematischen Schnittansicht dargestellt, in der eine erfindungsgemäße Vorrichtung 10 verwendet werden kann. Zur Verbesserung der Übersicht wird zeigt Figur 3 im Wesentlichen den Einlaufbereich 18 der Presse 16 wohingegen die Figur 4 den Auslaufbereich 20 darstellt. Verbunden sind diese Bereiche innerhalb der Presse durch den nicht näher spezifizierten Pressbereich 19.

In den Darstellungen der Figuren 3 und 4 wird darauf verzichtet, die jeweils symmetrisch vorhandenen Elemente im oberen und unteren Teil der dargestellten Doppelbandpresse separat und zweifach zu bezeichnen. Es versteht sich, dass die verschiedenen Elemente zumeist jeweils im Wesentlichen symmetrisch im oberen und im unteren Teil der Presse vorhanden sind.

Die Presse 16 weist einen Einlaufbereich 18, in dem das zu verpressende Material als Pressgut 22 zugeführt wird, einen Pressbereich 19 in dem das Pressgut 22 auf das Endmaß der Werkstoffplatte verdichtet, beheizt und ausgehärtet wird und einen Auslaufbereich 20, in dem das verpresste Material bzw. das Produkt (Werkstoffplatte) die Presse 16 verlässt, auf. Im Einlaufbereich 20 wird das Pressgut 22 als eine Streugutmatte aus einem Gemisch aus Partikeln oder faserartigen Stoffen und einem Bindemittel zugeführt, das in der Presse 16 durch Druck und Wärme zu einer Werkstoffplatte gepresst wird. Die Presse 16 arbeitet dabei kontinuierlich, also im Durchlaufbetrieb. In der Darstellung ist der Mittelteil der Presse 16, in denen eine Vielzahl an Presszylindern 27 Druck auf das Material ausüben, zur besseren Übersichtlichkeit nicht gezeigt.

In der Presse 16 sind Heizplatten 24 zur Wärmezuführung und eine Vielzahl an Presszylindern 27 an Pressenrahmen 26 zur Druckzuführung vorgesehen. Das Pressgut 22 wird mittels zweier umlaufender flexibler Bänder 28, bevorzugt als Stahlbänder ausgeführt, durch die Presse 16 geführt. Die Bänder 28 leiten sowohl die Wärme der Heizplatten 24 als auch den Druck der Presszylinder 27 an das Pressgut 22 weiter. Die Bänder 28 werden durch Antriebswalzen 30 angetrieben und über verschiedene Umlenkwalzen 32 entlang der durch den Pfeil angedeuteten Richtung umlaufend geführt. Die Rollstangen 34 sind beidseits kettenartig miteinander verbunden und erlauben eine gleichmäßige Verteilung des Drucks über die Breite der Presse 16. Beim Betrieb der Presse 16 tritt zwischen den Bändern 28, den Heizplatten 24 bzw. den schützend angeordneten Schonblechen und/oder Abrollplatten, den Antriebswalzen 30, Umlenkwalzen 32 und den Rollstangen 34 Reibung auf, sodass ein tribologisches System gebildet wird. Um die auftretende Reibung zu vermindern, ist eine Schmierung erforderlich und vorgesehen.

Üblicherweise erfolgt der Schmiermitteleintrag über die Stahlbänder 28 und/oder über die Rollstangen 34. Im dargestellten Ausführungsbeispiel erfolgt die Schmierung der Stahlbänder 28 über eine Schmiereinheit 36 im Bereich des Presseneinlaufs 18 durch die Schmiermittel auf die Rollstangen 34 aufgebracht wird. Als Schmiermittel werden üblicherweise Spezialöle verwendet, die an einer Anzahl von Schmierstellen zugeführt werden, die über die Breite der Bänder 28 oder der Rollstangen 34 auf einem Schmierbalken verteilt sind. Das Öl tropft von dort auf die Rollstangen 34. Die Rollstangen 34 übergeben und verteilen dann eine Teilmenge auf dem Band 28 und auf der Abrollplatte. Das auf dem Band 28 nach Durchlauf der Presse 16 verbleibende Öl kann von Reinigungsschabern 38 gesammelt oder von Walzen und Rollen abgestreift werden.

Hierbei wird in bisherigen Systemen zumeist die entsprechende Schmiermittelmenge, also die Dosiermenge des Öls, von der Pressensteuerung respektive der Kontrolleinrichtung 41 in Abhängigkeit von der Größe der Presse, der Pressentemperatur, dem Summendruck entlang der Pressstrecke und der Band- oder Produktionsgeschwindigkeit festgelegt. Diese Parameter werden hierin auch als Pressen- oder Produktionsparameter bezeichnet. Eine Feinabstimmung erfolgt dann vor Ort während des Betriebs bzw. während der Inbetriebnahme der Presse.

Das Aufbringen der entsprechenden Dosiermenge auf das Band und/oder auf die Rollstangen in der Schmiereinheit kann mit Hilfe von Progressivverteilern erfolgen. Die Kolbenhübe der Verteiler werden gezählt und erlauben so eine Überwachung der theoretischen und/oder kalkulatorischen Gesamtschmiermenge. Der Einfluss der verschiedenen Parameter Temperatur, Druck, Geschwindigkeit und andere wird während der Inbetriebnahme eingestellt. Dabei handelt es sich jedoch um eine Grundeinstellung, die bei Bedarf angepasst werden muss. Die Anpassung erfolgt durch die Änderung der aktuellen Einstellwerte in der Pressenvisualisierung (Benutzerschnittstelle). Eine Anpassung der Grundeinstellung wird durch Änderung der Umgebungsbedingungen notwendig, die in einer zuvor erfolgten Schmiermengenregelung nicht mit berücksichtigt werden können. Auslöser hierfür können beispielsweise Änderungen im Rohmaterial wie ein höherer Staubanteil und eine daraus resultierende Ölbindung, eine Erhöhung der Feuchte im Rohmaterial mit daraus resultierendem Wasserdampf, der wiederum den Schmierfilm abwaschen kann, oder auch eine Änderung des Öltyps bzw. des Schmiermittellieferanten sein. Daher muss die Schmierung der Bänder während der Produktion vor Ort geprüft werden.

Die erfindungsgemäße Vorrichtung 10 erlaubt im Vergleich zu bisherigen Ansätzen eine objektive Feststellung und Überwachung des aktuellen Schmierzustandes des umlaufenden Bandes 28. Hierdurch kann eine gleichbleibende hohe Qualität und Sicherheit gewährleistet werden.

Die erfindungsgemäße Vorrichtung 10 kann beispielsweise in Form einer mit der Presse 16 bzw. mit der Pressensteuerung verbundenen Kontrolleinrichtung 41 realisiert werden. Über eine Benutzerschnittstelle 40 an dieser Kontrolleinrichtung 41 kann einem Maschinenführer 42 signalisiert werden, ob der aktuelle Schmierzustand ausreichend ist oder nicht. Ebenfalls ist es beispielsweise möglich, dass eine erfindungsgemäße Vorrichtung 10 als Softwaremodul zur Integration in eine bereits vorhandene Pressensteuerung realisiert ist und damit einfach integriert sowie nachgerüstet werden kann. Das erfindungsgemäße Verfahren entspricht einem Betriebsverfahren für Pressen 16. Wie weiter ersichtlich, erhält die Kontrolleinrichtung 41 die notwendigen Daten von der Vorrichtung 10, die mit einem Sensor 11 im Auslaufbereich 20 der Presse 16 wirkverbunden ist. Die Vorrichtung 10 kann dabei mit dem Sensor 11 eine Einheit bilden. Alternativ kann die Vorrichtung auch über eine Funkstrecke die Messwerte des Sensors 11 aufnehmen und vergleichen.

Dabei ist ein Sensor 11a in Wirkverbindung mit dem Band 28, ein Sensor 11b in Wirkverbindung mit den Rollstangen 34, ein Sensor 11c in Wirkverbindung mit der Antriebswalze (30) respektive deren Antrieb, ein Sensor 11d in Wirkverbindung mit dem Pressenrahmen 26 und ein Sensor 11e mit einem Presszylinder 27 dargestellt. Die genannten Sensoren könnten einzeln oder in Kombination auftreten.

Verschiedene Kraftsensoren können zur Ermittlung der durch die verschiedenen Presszylinder auf das Band und auf das Streugut ausgeübten Kräfte verwendet werden. Hierbei umfasst die Bezeichnung Kraftsensor neben Drucksensoren insbesondere auch andere Vorrichtungen, um einen Hydraulikdruck zu messen oder abzuschätzen, wie beispielsweise einen Sensor zum Erfassen der an einen Druckerzeuger angelegten elektrischen Spannung. Je nachdem an welchem Presszylinder (Zylinder im Einlauf des Keilverdichters oder im Auslauf des Keilverdichters) die ausgeübte Kraft gemessen wird, ergibt sich eine unterschiedliche Aussagekraft bezüglich der geleisteten Verdichtungsarbeit. Bei der oben dargestellten Berechnung eines Maschinenreibwerts als Schmierparameter ist die aus der Verdichtungsarbeit resultierende Reibung von der aus unzureichender Schmierung resultierenden Reibung zu unterscheiden. Diese Unterscheidung kann auf Basis einer Abschätzung der geleisteten Verdichtungsarbeit basierend auf den Werten der verschiedenen Kraftsensoren erfolgen. Hierbei sind die durch die Presszylinder im Bereich des Keilverdichters ausgeübten Kräfte bzw. die entsprechenden Messwerte besonders aussagekräftig. Besonders bevorzugt werden eine Vielzahl an Sensoren 11 miteinander verschaltet und ausgewertet. Insbesondere ist es vorgesehen, die vollständige Verdichtungsarbeit empirisch oder messtechnisch in der Presse auszulesen und in der erfindungsgemäßen Vorrichtung zu verwerten.

Der Sensor 11a kann an verschiedenen Stellen der Presse am vorbeilaufenden Band 28 angeordnet sein. Zur besseren Übersichtlichkeit wird darauf verzichtet alternative Sensorpositionen insbesondere auch am unteren Band 28 einzuzeichnen. Es versteht sich, dass weitere Sensoren auch an anderen Positionen vorgesehen sein können. Vorzugsweise wird ein Lichtsensor verwendet, der eine Intensität des von dem Band 28 reflektierten Lichts aus einer Strahlungsquelle ausmesse kann. Dies kann auch im Zusammenspiel mit einer hierzu vorgesehenen Lichtquelle zur Lichtemission erfolgen. Je nach Schmierzustand des Bandes 28 wird eine unterschiedliche Lichtmenge reflektiert. Daher ist auf Basis einer Messung der Intensität des reflektierten Lichtes eine Aussage bezüglich der Schmiermittelmenge auf dem Band 28 möglich.

Ebenfalls kann ein weiterer Lichtsensor als Absorptionssensor verwendet werden, der im Zusammenspiel mit einer entsprechenden Lichtquelle eine Lichtmenge ermitteln kann, die bei einer Interaktion von dem Band 28 bzw. von der Schmiermittelschicht auf dem Band 28 absorbiert wird. Es ist möglich, dass ein Lichtsensor die Funktionen kombiniert und sowohl eine Reflektion als auch eine Absorption misst.

Ebenfalls kann ein Leitfähigkeitssensor verwendet werden. Ein Leitfähigkeitssensor bezeichnet dabei einen Sensor zum Detektieren einer elektrischen Leitfähigkeit des Bandes 28 bzw. der Schmiermittelschicht auf dem Band 28. Diese Leitfähigkeit ändert sich in Abhängigkeit der vorhandenen Schmiermittelmenge, sodass auf Basis einer Leitfähigkeitsmessung eine Aussage bezüglich der aktuellen Schmiermittelmenge auf dem Band getroffen werden kann.

Des Weiteren kann ein Laserabstandssensor vorgesehen sein. Ein Laserabstandssensor kann insbesondere als Laser-Triangulationssensor ausgeführt sein, mit dem ein Abstand bzw. eine Schichtdicke auf Basis verschiedener Reflektionen an Grenzschichten sehr genau gemessen werden kann. Durch die Abstandsmessung kann eine Dicke der Schmiermittelschicht ermittelt werden und damit eine direkte Aussage über die Schmiermittelmenge auf dem Band getroffen werden.

Des Weiteren kann ein Ultraschallsensor vorgesehen sein, durch den ein Schallreflektionswert des Bandes 28 gemessen werden kann. Die Schallreflektion des Bandes ändert sich in Abhängigkeit von der Schmiermittelmenge, die sich auf dem Band befindet. Insbesondere werden Schallreflektionen verschiedener Schichtgrenzen gemessen. Daher kann aus dem Sensorsignal des Ultraschallsensors 54 auf eine Schmiermittelmenge auf dem Band rückgeschlossen werden. Ansätze zur Schichtdickenmessung mittels Ultraschall werden beispielsweise in EP 1 676 041 A1 und EP 0 021 524 A1 beschrieben.

Die dargestellten Sensorprinzipien erlauben eine einfache und zuverlässige unmittelbare Abschätzung einer Schmiermittelmenge auf dem Band. Ebenfalls ist es möglich, dass Signale mehrerer gleicher oder verschiedener Sensoren 11 kombiniert werden und/oder andere Sensoren 11 verwendet werden.

Weiterhin kann ein Leistungssensor zur Messung einer Antriebsleistung bzw. eines Antriebsmoments der Antriebswalze 30 bzw. eines Motors der Antriebswalze 30 verwendet werden. Ein Leistungssensor bezeichnet dabei Vorrichtung, mit der ein Antriebsmoment einer Antriebswalze ermittelt werden kann. Beispielsweise kann die Leistung der Antriebswalze gemessen werden und auf dieser Basis auf das Antriebsmoment rückgeschlossen werden. Ein höheres Moment ist ein Indiz für eine zu geringe Schmierung.

Ebenfalls kann beispielsweise ein Leistungssensor verwendet werden, der an einer Stromversorgung der Presse angeordnet ist. Ein Leistungssensor bezeichnet hierbei eine Vorrichtung zur Messung einer Stromstärke des Eingangsstroms, der in der Presse verwendet wird. Je nach aktueller Reibung, wird zum Betrieb der Presse bei konstanter Geschwindigkeit (des Bandes) mehr oder weniger Strom verbraucht. Im Falle einer vergleichsweise hohen Reibung, also einer tendenziell zu geringen Schmiermittelmenge, ist also der Stromverbrauch höher als bei ausreichender Schmierung des Bandes.

Zumindest die Hydraulikdrücke der verschiedenen Presszylinder aber auch der Stromverbrauch bzw. die Leistung verschiedener Komponenten der Presse 16 sowie die Dicke des zu pressenden Materials sind in der Pressensteuerung ohnehin verfügbar. Durch die Verwendung bzw. Berücksichtigung dieser Werte kann die erfindungsgemäße Vorrichtung bei geringem Integrationsaufwand auch nachträglich in einer bestehenden Installation integriert werden, ohne weitere Sensoren zu erfordern.

Zusätzlich zu Messwerten verschiedener Sensoren ist es erfindungsgemäß ebenfalls möglich, Pressen- oder Produktionsparameter in die Ermittlung des Schmierparameters miteinzubeziehen. Insbesondere können die Bandgeschwindigkeit, eine Temperatur der Heizplatten, eine Bandgeschwindigkeit und Parameter zur Beschreibung der Geometrie der Presse bei der Ermittlung des Schmierparameters berücksichtigt werden. Auf Basis dieser Parameter kann der ermittelte Schmierparameter weiter angepasst werden. Insbesondere kann auf Besonderheiten der aktuellen Produktion reagiert werden. Die Unterscheidung zwischen Messwerten verschiedener Sensoren einerseits und Pressenparametern andererseits besteht dabei darin, dass es sich bei Pressenparametern um Werte handelt, die in der Prozesssteuerung für eine bestimmte Produktionscharge spezifiziert werden, und es sich bei Messwerten um laufend ermittelte Werte handelt. Der Übergang kann hierbei teilweise fließend sein.

Beispielsweise kann die Bandgeschwindigkeit bei der Berechnung des Ölbedarfs Q(v) zu berücksichtigen sein. In der gleichen Weise wirken die Parameter für Druck Q(p) und Temperatur Q(T). Weiterhin wird die Schmiermenge auch im Falle einer leeren Presse reduziert. Wenn festgestellt wird, dass die Presse nach längeren Leerfahrten unter- oder überschmiert ist, kann die Schmierung angepasst werden. Bei voller Presse kann die Gesamtschmiermenge mit einem weiteren Faktor angepasst werden.

Im Falle der beispielhaft beschriebenen Doppelbandpresse ist es erforderlich, die Verteilung zwischen oberem und unterem Band zu berücksichtigen. Hierbei benötigt das obere Band zumeist eine höhere Schmiermittelmenge. Der anteilige Wert für das untere Band lässt sich in Prozent festlegen, das obere Band erhält den verbleibenden prozentualen Anteil der zugrunde liegenden Gesamtschmiermenge.

In Abhängigkeit der Pressenbreite und weiterer Geometrieparameter ist die Schmiermenge auf einen Verteilerkreis oder, ab gewissen Breiten, auf zwei Verteilerkreise aufgeteilt. Sind zwei Verteilerkreise vorhanden, kann zudem zwischen der Schmiermenge in der Mitte und am Rand unterschieden werden. Eine Reduzierung der Schmiermenge am Rand hilft gegen starke Verschmutzung der Antriebswalzen im Außenbereich. Allerdings führt eine Unterschmierung auch leicht zu Schäden an den Abrollplatten, Rollstangen und Stahlbändern bis hin zu Korrosion der Abrollplatte. Eine Messung kann beispielsweise basierend auf Sensoren in den einzelnen Abschnitten des Bandes (in der Mitte, am Rand oder mehrere Zwischenstufen) erfolgen.

Die Benutzerschnittstelle kann in Hardware (beispielsweise in Form eines Computermonitors oder einer akustischen oder optischen Alarmeinrichtung zur Ausgabe eines optischen oder akustischen Warnsignals) und/oder in Software (beispielsweise in Form einer Anbindung an eine bereits bestehende Schnittstelle zur Steuerung der Presse) umgesetzt werden. Durch die Benutzerschnittstelle 40 kann der Maschinenführer 42 gewarnt werden, sobald der ermittelte Schmierparameter einen vordefinierten Schwellwert unter- bzw. überschreitet oder um einen vordefinierten Wert von einem Sollwert des Schmierparameters abweicht. Ebenfalls ist es möglich, dass dem Maschinenführer 42 der Schmierparameter direkt ausgegeben wird.

Der Schmierparameter kann dabei beispielsweise in Form einer prozentualen Angabe bezüglich eines vordefinierten Referenzwertes oder als absolute Angabe auf einer beliebigen Skala ermittelt und weitergegeben werden. Ein Referenzwert kann beispielsweise während der Inbetriebnahme der Presse 16 in einem entsprechenden Test ermittelt werden. Ebenfalls kann ein Referenzwert basierend auf einer Simulation oder basierend auf Erfahrungswerten festgelegt werden. Der Referenzwert wird beispielsweise bei der Ermittlung des Schmierparameters berücksichtigt, sodass der Schmierparameter als prozentuale Angabe vorliegen kann.

Bevorzugt wird in der Kontrolleinrichtung 41 eine Tabelle mit Parametern vorliegen, die auf die entsprechende Anlage, das Pressgut und/oder die Presse selbst Bezug nimmt und festgelegt wurde.

Ein Schwellwert für eine Warnung oder für eine Anpassung der Schmiermittelmenge kann für eine bestimmte Presse vordefiniert sein. Zumeist werden bei der Festlegung eines Schwellwerts verschiedene Presseparameter berücksichtigt. Schwellwerte können beispielsweise in einem Testlauf bei der Installation einer Presse ermittelt werden. Ein Schwellwert kann beispielsweise als absolute oder prozentuale Abweichung angegeben werden. Sobald der Schwellwert über- bzw. unterschritten wird, wird der Maschinenführer hierüber in Kenntnis gesetzt und/oder mittels einer Regeleinrichtung eine Anpassung der Schmiermittelmenge automatisch vorgenommen. Beispielsweise kann der Schwellwert als Abweichung vom Referenzwert um zehn Prozent nach oben bzw. nach unten festgelegt sein.

Die Eingangsschnittstelle 12 der Vorrichtung 10 kann einerseits an die Pressensteuerung angebunden sein und die in dieser Pressensteuerung ohnehin vorhandenen Daten wie Antriebsmoment, Presskraft, Plattendicke etc. nutzen. Durch eine bevorzugt kontinuierliche Quotientenbildung aus Zugkraft am Band 28 (ermittelt aus dem Antriebsmoment unter Berücksichtigung der Verdichtungsarbeit) und der Normalkraft (ermittelt aus den Hydraulikdrücken) auf das Band 28, kann ein Maschinenreibwert als Schmierparameter berechnet werden. Je höher die Reibung in der Maschine, desto geringer die Schmierung. Als zugeordneter Referenz- oder Vergleichswert kann dann ein für eine bestimmte Produktion typischer Wert verwendet werden, der bei der Inbetriebnahme der Presse 16 als Normal- oder Referenzwert in der Rezeptverwaltung abgelegt wurde oder der auf Basis eines oder mehrerer Pressenparameter berechnet wird. Der Maschinenreibwert kann dann direkt oder nach einer Berücksichtigung eines entsprechenden Referenzwertes als Schmierparameter weiterverwendet werden.

Andererseits kann die Schnittstelle 12 der Vorrichtung 10 auch an einen oder mehrere Sensoren angebunden sein, die direkt zur Messung einer Schmiermittelmenge auf dem Band ausgebildet sind.

In anderen Worten basiert die vorliegende Erfindung also auf der Berücksichtigung eines Mess- oder Sensorwerts, der sich während des Betriebs der Presse ändern kann, wohingegen bisherige Ansätze auf feststehenden bzw. für eine bestimmte Produktion oder Charge fest vorgegebenen Pressen- bzw. Produktionsparametern basieren. Hierbei kann sowohl ein Sensor, der bereits in der Maschine vorhanden und an die Pressensteuerung angeschlossen ist, als auch ein zusätzlicher Sensor für die spezifische Verwendung zur Feststellung des Schmierzustandes ausgewertet werden.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Ein Computerprogramm kann auf einem nicht-flüchtigen Datenträger gespeichert/vertrieben werden, beispielsweise auf einem optischen Speicher oder auf einem Halbleiterlaufwerk (SSD). Ein Computerprogramm kann zusammen mit Hardware und/oder als Teil einer Hardware vertrieben werden, beispielsweise mittels des Internets oder mittels drahtgebundener oder drahtloser Kommunikationssysteme, vertrieben werden. Bezugszeichen in den Patentansprüchen sind nicht einschränkend zu verstehen.

### Bezugszeichenliste:

- 10: Vorrichtung
- 11: Sensor
11a Sensor (an 28)
11b Sensor (an 34)
11c Sensor (an 30)
11d Sensor (an 26)
11e Sensor (an 27)
- 12: Eingangsschnittstelle
- 14: Auswerteeinheit
- 15: Regeleinrichtung
- 16: Presse
- 18: Einlaufbereich
- 19: Pressbereich
- 20: Auslaufbereich
- 22: Pressgut
- 24: Heizplatten
- 26: Pressenrahmen
- 27: Presszylinder
- 28: Band
- 30: Antriebswalze
- 32: Umlenkwalze
- 34: Rollstangen
- 36: Schmiereinheit
- 38: Reinigungsschaber
- 40: Benutzerschnittstelle
- 41: Kontrolleinrichtung
- 42: Maschinenführer

## Patentansprüche

1. Kontinuierlich arbeitende Presse (16) zur Herstellung von Werkstoffplatten, mit einem umlaufenden flexiblen Band (28) zum Transport von Pressgut (22) und zur Übertragung von Pressdruck auf das Pressgut (22);
mit mindestens einem Sensor (11) zum Messen eines physikalischen Phänomens, das mit einer Schmiermittelmenge auf dem Band (28) zusammenhängt; und mit einer Vorrichtung (10) zur Überwachung und/oder Regelung eines Schmierzustands des umlaufenden flexiblen Bandes (28) mit:
einer Eingangsschnittstelle (12) zum Empfangen eines Messwerts von dem Sensor (11) in der Presse (16) und
einer Auswerteeinheit (14) zum Ermitteln eines Schmierparameters als Kenngröße für eine Schmiermittelmenge auf dem Band (28) basierend auf dem Messwert des Sensors (11), wobei der Sensor (11) in Wirkverbindung mit dem Band (28), den Rollstangen (34), der Antriebstrommel (30) respektive dessen Antrieb, am Pressenrahmen (26) und/oder am Presszylinder (27) außerhalb des Pressbereiches (19), im Rücklauf des Bandes (28) oder der Rollstangen (34), bevorzugt im Auslaufbereich (20) zwischen Pressbereich (19) und Antriebswalze angeordnet ist.

2. Kontinuierlich arbeitende Presse (16) nach Anspruch 1, weiterhin umfassend eine Datenschnittstelle oder bevorzugt eine Benutzerschnittstelle (40) zum Bereitstellen einer Statusinformation an einen Maschinenführer (42) der Presse (16) auf Basis des Schmierparameters, wobei die Benutzerschnittstelle (40) insbesondere zur Alarmierung des Maschinenführers (42), wenn der Schmierparameter einen vordefinierten oberen Schwellwert überschreitet und/oder wenn der Schmierparameter einen vordefinierten unteren Schwellwert unterschreitet, ausgebildet ist.

3. Kontinuierlich arbeitende Presse (16) nach einem der vorstehenden Ansprüche, weiterhin umfassend eine Regeleinrichtung (60) zur Regelung einer mittels einer Schmiereinheit (36) auf das Band (28) aufgebrachten Schmiermittelmenge basierend auf dem Schmierparameter.

4. Kontinuierlich arbeitende Presse (16) nach einem der vorstehenden Ansprüche, wobei die Eingangsschnittstelle (12) zum Empfangen eines Messwerts von einem Sensor (11), ausgebildet als
ein Lichtsensor zum Messen eines Lichtreflektionswertes des Bandes (28) und/oder einer Rollstange (34) der Presse (16);
ein Leitfähigkeitssensor zum Messen eines Leitfähigkeitswertes des Bandes (28) und/oder einer Rollstange (34) der Presse (16);
ein Lichtsensor zum Messen eines Lichtabsorptionswertes des Bandes (28) und/oder einer Rollstange (34) der Presse (16);
ein Laserabstandssensor zum Messen einer Schichtdicke eines Schmiermittelfilms auf dem Band (28) und/oder auf einer Rollstange (34) der Presse (16); und/oder
ein Ultraschallsensor zum Messen eines Schallreflektionswertes des Bandes (28) und/oder einer Rollstange (34) der Presse (16).

5. Kontinuierlich arbeitende Presse (16) nach einem der vorstehenden Ansprüche, wobei zumindest Teile der Vorrichtung (10), wie die Eingangsschnittstelle (12), die Auswerteeinheit (14) und/oder die Regeleinrichtung (60) zur Kommunikation mit einer Pressensteuerung und zum Empfangen von in der Pressensteuerung verfügbaren Daten, bevorzugt mit der Kontrolleinrichtung (41) der Presse, ausgebildet ist.

6. Kontinuierlich arbeitende Presse (16) nach einem der vorstehenden Ansprüche, wobei die Eingangsschnittstelle (12) zum Empfangen eines Messwerts von
einem Kraftsensor zum Messen der Presskraft zumindest an einem Presszylinder (27) oder zumindest an einem Pressenrahmen (26) in der Presse (16);
einer Summiervorrichtung für die empirisch ermittelten und/oder gemessenen Presskräfte in der Presse (16) respektive dem Pressbereich (19) der Presse (16) und/oder
einem Leistungssensor zum Messen einer Antriebsleistung an der Antriebswalze (30) oder deren zugehörigem Antrieb zum Antreiben des Bandes (28) in der Presse (16) ausgebildet ist.

7. Kontinuierlich arbeitende Presse (16) nach einem der vorstehenden Ansprüche, wobei die Auswerteeinheit (14) zum Ermitteln des Schmierparameters aus dem Quotienten der Antriebsleistung und der Presskraft der Presse (16) ausgebildet ist.

8. Kontinuierlich arbeitende Presse (16) nach einem der vorstehenden Ansprüche, wobei die Eingangsschnittstelle zum Empfangen von einem oder mehreren Messwerten ausgebildet sind, wobei die Messwerte dazu geeignet sind die Verdichtungsarbeit, die Zugkraft an den Bändern und/oder die Summenkraft aller Presszylinder, bevorzugt der Presszylinder die an der Verdichtungsarbeit des Pressgutes beteiligt sind, zu bestimmen.

9. Kontinuierlich arbeitende Presse (16) nach einem der vorstehenden Ansprüche, wobei die Auswerteeinheit zum Ermitteln des Schmierparameters der Quotient der Zugkraft der Stahlbänder unter Berücksichtigung der Verdichtungsarbeit und der Normalkraft der Presse ausgebildet ist.

10. Kontinuierlich arbeitende Presse (16) nach einem der vorstehenden Ansprüche, wobei
die Eingangsschnittstelle (12) zum Empfangen eines Pressenparameters als Kenngröße für eine Eigenschaft oder Einstellung der Presse (16), insbesondere einer Geometrie und/oder Länge des Pressspaltes, eines Elements der Presse (16), einer Temperatur einer Heizplatte (24) , einer Dicke, Breite oder Beschaffenheit des Pressgutes (22) und/oder einer Transportgeschwindigkeit des Bandes (28) in der Presse, ausgebildet ist; und
die Auswerteeinheit (14) zum Ermitteln des Schmierparameters basierend auf dem Pressenparameter ausgebildet ist.

11. Kontinuierlich arbeitende Presse (16) nach einem der vorstehenden Ansprüche, wobei die Auswerteeinheit (14) zum Ermitteln des Schmierparameters basierend auf einem vordefinierten Referenzwert ausgebildet ist.

12. Kontinuierlich arbeitende Presse (16) nach einem der vorstehenden Ansprüche, weiterhin umfassend:
eine steuerbare Schmiereinheit (36) zum Aufbringen von Schmiermittel, bevorzugt auf das Band (28) und/oder die Rollstangen (34); und
eine Regeleinrichtung (60) zur Regelung einer von der Schmiereinheit (36) aufgebrachten Schmiermittelmenge basierend auf dem Schmierparameter.

13. Kontinuierlich arbeitende Presse (16) nach einem der vorstehenden Ansprüche, **dadurch gekennzeichnet, dass** als Sensoren (11) Licht-, Leitfähigkeits-, Laser-, Ultraschall-, Druck-, Zug-, Leistungs- und/oder Kraftsensoren angeordnet sind, und/oder
dass der Sensor (11) geeignet ist über die Breite des Bandes (28) abschnittsweise zu messen und/oder die Schmiervorrichtung geeignet ist über die Breite des Bandes (28) abschnittsweise unterschiedliche Schmiermittelmengen abzugeben.

14. Verfahren zur Überwachung und/oder Regelung eines Schmierzustands eines umlaufenden flexiblen Bandes (28) zum Transport von Pressgut (22) und zur Übertragung von Pressdruck auf das Pressgut (22) in einer kontinuierlich arbeitenden Presse (16) zur Herstellung von Werkstoffplatten, mit den Schritten:
Empfangen eines Messwerts von einem mit der Presse (16) in Wirkverbindung stehenden Sensor (11), wobei der Sensor (11) zum Messen eines physikalischen Phänomens ausgebildet ist, das mit einer Schmiermittelmenge auf dem Band (28) zusammenhängt und wobei der Sensor (11) in Wirkverbindung mit dem Band (28), den Rollstangen (34), der Antriebstrommel (30) respektive deren Antrieb, dem Pressenrahmen (26) und/oder dem Presszylinder (27) steht und außerhalb des Pressbereiches (19), im Rücklauf des Bandes (28) oder der Rollstangen (34), bevorzugt im Auslaufbereich (20) zwischen Pressbereich (19) und Antriebswalze angeordnet ist; und
Ermitteln eines Schmierparameters als Kenngröße für eine Schmiermittelmenge auf dem Band (28) basierend auf dem Messwert des Sensors (11).

15. Computerprogrammprodukt mit einem Datenträger, auf dem Programmcode gespeichert ist, der dazu ausgebildet ist, ein Verfahren mit den Schritten nach Anspruch 14 auszuführen, wenn der Programmcode ausgeführt wird.
